# EUROPEAN PATENT APPLICATION

(11) **EP 4 660 766 A1**
(43) Date of publication of application: **10.12.2025**
(21) Application number: 24853127.9
(22) Date of filing: 29.01.2024
(51) Int. Cl.: G06F 3/0481

(54) **APPLICATION WINDOW DISPLAY METHOD AND ELECTRONIC DEVICE**

(30) Priority: 11.08.2023 CN 202311020769
(71) Applicant: Huawei Technologies Co., Ltd., Shenzhen, Guangdong 518129 (CN)
(72) Inventor: WU, Jiangzheng, Shenzhen, Guangdong 518129 (CN); YU, Xiaofeng, Shenzhen, Guangdong 518129 (CN); XU, Feilong, Shenzhen, Guangdong 518129 (CN); ZHANG, Yunfei, Shenzhen, Guangdong 518129 (CN); LI, Yifan, Shenzhen, Guangdong 518129 (CN)
(74) Representative: Pfenning, Meinig & Partner mbB
(86) International application number: PCT/CN2024/074461
(87) International publication number: WO 2025/035710

(57) **Abstract**

An application window display method and an electronic device are provided, which relate to the field of terminal technologies, to reduce a time delay of displaying an application window across systems on the electronic device, and improve user experience. In the foregoing application window display method, a first operating system of the electronic device controls, in response to a first operation performed by a user on an application icon of a first application in a first interface (S401), the first application to run in a container (S402); the first operating system receives first description information of the first application sent by the first application (S403); and the first operating system obtains first window information of the first application from a memory of the electronic device based on the first description information of the first application, and displays, based on the first window information of the first application, a second interface of the first application in the first window created by the first operating system (S404).

## Description

This application claims priority to Chinese Patent Application No. 202311020769.5, filed with the China National Intellectual Property Administration on August 11, 2023 and entitled "APPLICATION WINDOW DISPLAY METHOD AND ELECTRONIC DEVICE", which is incorporated herein by reference in its entirety.

### TECHNICAL FIELD

This application relates to the field of terminal technologies, and in particular, to an application window display method and an electronic device.

### BACKGROUND

With continuous integration of terminal device forms and user use scenarios, operating systems that can be used by terminal devices also develop toward integration and complementation. For example, a terminal device may include a host operating system and a virtual machine configured to run another operating system environment. The virtual machine includes an independent infrastructure configured to support running of the operating system, and further includes an application running in the operating system. On the terminal device, an application may be used across systems or displayed across ecosystem windows. To be specific, a user may view or operate, in an application window provided by the host operating system of the terminal device, an application provided by another operating system.

In some technical solutions, a manner of implementing cross-ecosystem window display of the application includes: A complete display software stack used to display a target application is reserved in the virtual machine. The virtual machine executes the display software stack to complete processes such as window drawing, window management, and window composition of the target application. Then, the virtual machine sends complete window information of a window to the host operating system. The host operating system receives the window information, and renders and displays an application window of the target application based on the window information, to implement cross-ecosystem window display of the application. The complete display software stack is reserved in the virtual machine. Inside the virtual machine, the target application needs to display the software stack according to a display protocol (for example, wayland), and then send the window information corresponding to the display software stack to the host operating system according to a remote desktop protocol (remote desktop protocol, RDP).

However, in the foregoing technical solutions, a large time delay occurs when the application window is displayed on the host operating system side. As a result, from a perspective of the user, problems such as window display freeze may be caused, and user experience is poor.

### SUMMARY

Embodiments of this application provide an application window display method and an electronic device, to reduce a time delay of displaying an application window across systems on the electronic device, and improve user experience.

To achieve the foregoing objective, the following technical solutions are used in embodiments of this application.

According to a first aspect, an application window display method is provided. The method may be applied to a first operating system of an electronic device. The electronic device further includes a container. The container includes a second operating system and a first application applicable to the second operating system. The container is used to provide a running environment of the second operating system for the first application. The electronic device displays a first interface, the first interface is an interface of the first operating system, and the first interface includes an application icon of the first application. In the foregoing method, the first operating system controls, in response to a first operation performed by a user on the application icon of the first application in the first interface, the first application to run in the container. The first operating system receives first description information of the first application sent by the first application. The first operating system obtains first window information of the first application from a memory of the electronic device based on the first description information of the first application, and displays, based on the first window information of the first application, a second interface of the first application in a first window created by the first operating system.

The first description information of the first application indicates a location at which the first window information of the first application is stored in the memory of the electronic device, and the first window information of the first application is window information of a home page of the first application or an interface displayed before the first application is exited last time.

In a cross-system transmission process of the window information, the first application sends only description information of the window information to the first operating system, and the window information does not need to be sent or image buffer content of the window does not need to be copied and transmitted. In this way, transmission bandwidth can be reduced, an information transmission speed can be increased, and performance on the first operating system side is also ensured. In addition, the description information is transmitted between the first application and the first operating system. Therefore, in a process of implementing cross-system transmission of the window information, the first application does not need to complete a memory read operation (that is, does not need to read the window information from the memory and send the window information to the first operating system), and the first operating system does not need to complete a memory write operation (that is, does not need to write the window information sent by the first application into the memory), and only needs to read the window information from the memory based on the description information on the first operating system side. In this way, a process of reading the memory on the first application side when the window information is sent is reduced, a process of writing the window information into the memory on the first operating system side when the window information is sent is reduced, and information transmission duration is also reduced. Correspondingly, a time delay of cross-system display of the application window is also reduced.

In addition, in the foregoing method, the first application writes the window information into the memory of the electronic device, the first operating system reads the window information from the memory of the electronic device, and the first application (or the container) and the first operating system may share the memory of the electronic device. This manner may also be considered as that the first operating system manages a window of the first application in a unified manner. This centralized management manner of the application window greatly reduces difficulty in synchronously managing the application windows on the container side and the first operating system side, and ensures normal display of the windows on the first operating system side.

In a possible implementation of the first aspect, the second interface of the first application includes a first control. The first operating system may further send operation information of the second operation to the first application in response to a second operation performed by the user on the first control in the second interface. The operation information of the second operation includes type information and location information of the second operation, and the operation information of the second operation is used by the first application to determine second window information and second description information that correspond to a third interface displayed after the first application responds to the second operation. The second description information of the first application indicates a location at which the second window information of the first application is stored in the memory of the electronic device. The first operating system receives the second description information of the first application sent by the first application. The first operating system obtains the second window information of the first application from the memory of the electronic device based on the second description information of the first application, and displays the third interface of the first application in the first window based on the second window information of the first application.

In this implementation, an interface corresponding to the first application may be displayed on the first operating system side, and the user may experience an application of another operating system across systems or ecosystems on the first operating system side, or may experience "seamless" switching of the containerized application window from the container side to the first operating system side on the first operating system side.

In a possible implementation of the first aspect, in response to a third operation performed by the user on a second control, the first operating system closes the first window, and controls the first application in the container to terminate running. Alternatively, in response to a third operation performed by the user on a second control, the first operating system closes the first window, and controls the first application in the container to keep running.

In a possible implementation of the first aspect, the first operating system sends, in response to a fourth operation performed by the user on the first window, operation information of the fourth operation to the first application. The fourth operation indicates an operation of zooming in or zooming out the first window by the user. The operation information of the fourth operation is used by the first application to determine fourth window information and fourth description information that correspond to a fourth interface displayed after the first application responds to the fourth operation. The fourth description information of the first application indicates a location at which the fourth window information of the first application is stored in the memory of the electronic device. The first operating system receives the fourth description information of the first application sent by the first application. The first operating system obtains the fourth window information of the first application from the memory of the electronic device based on the fourth description information of the first application, and displays the fourth interface of the first application in the first window based on the fourth window information of the first application.

In the foregoing implementation, the interface corresponding to the first application may be displayed on the first operating system side, and the user may perform, on the first operating system side across systems or ecosystems, an operation on content in the interface or on the first window that displays the interface, or may experience "seamless" switching of the containerized application window from the container side to the first operating system side on the first operating system side.

In a possible implementation of the first aspect, the container further includes at least one other application applicable to the second operating system, and the container is used to provide a running environment of the second operating system for the at least one other application. The first interface further includes an application icon corresponding to the at least one other application, each of the other applications corresponds to one window created by the first operating system, and an interface of the other application is displayed in each window.

In this implementation, the user may select to start a plurality of containerized applications on the first operating system side, and the first operating system may display windows respectively corresponding to the plurality of containerized applications selected by the user and interfaces in the windows. It can be learned that the user may experience, on the first operating system side, a plurality of applications applicable to another operating system across systems or ecosystems, or experience "seamless" switching of the containerized application window from the container side to the first operating system side on the first operating system side.

In a possible implementation of the first aspect, a mapping relationship is established between the first window and the first application. The first operating system determines, based on the first window and the mapping relationship, the first application corresponding to the second interface. The first operating system sends the operation information of the second operation to the first application.

In a possible implementation of the first aspect, the first window information is determined by the first application according to a preset display protocol, and the first description information is sent by the first application to the first operating system according to the preset display protocol. In another possible implementation of the first aspect, the operation information of the second operation is sent by the first operating system to the first application according to a preset display protocol.

In this way, the first application can send the description information according to only one preset display protocol. This is equivalent to reducing a processing period corresponding to the display protocol, so that a display time delay is reduced when the first operating system displays the application window. From the perspective of the user, a problem of window display freezing is alleviated and user experience is improved.

In a possible implementation of the first aspect, the first operating system receives a connection request sent by the first application according to the preset display protocol; and the first operating system establishes, in response to the connection request, a communication connection to the first application according to the preset display protocol.

In this implementation, the communication connection according to the preset display protocol is established between the first operating system and the first application, and information is transmitted based on the communication connection, to ensure that the first application and the first operating system can normally communicate with each other and transmit window information.

In a possible implementation of the first aspect, the first operating system and the container share a kernel of the electronic device, and the first operating system and the container share the memory of the electronic device.

In a possible implementation of the first aspect, the first operation includes a tap operation and/or a touch operation, the second operation includes a tap operation and/or a touch operation, the third operation includes a tap operation, and the fourth operation includes one or more operations of tapping, touching, and dragging. In addition, the first operating system and the second operating system may be a same operating system, or the first operating system and the second operating system may be different operating systems.

According to a second aspect, an embodiment of this application provides an electronic device. The electronic device includes a first operating system and a container. The container includes a second operating system and a first application applicable to the second operating system. The container is used to provide a running environment of the second operating system for the first application. The electronic device displays a first interface, the first interface is an interface of the first operating system, and the first interface includes an application icon of the first application.

The first operating system is configured to control, in response to a first operation performed by a user on the application icon of the first application in the first interface, the first application to run in the container. The first application is used to send first description information of the first application to the first operating system. The first description information of the first application indicates a location at which first window information of the first application is stored in a memory of the electronic device. The first window information of the first application is window information of a home page of the first application or an interface displayed before the first application is exited last time. The first operating system is further configured to receive the first description information of the first application. The first operating system is further configured to: obtain the first window information of the first application from the memory of the electronic device based on the first description information of the first application, and display, based on the first window information of the first application, a second interface of the first application in a first window created by the first operating system.

In a possible implementation of the second aspect, the second interface includes a first control. The first operating system is further configured to send, in response to a second operation performed by the user on the first control in the second interface, operation information of the second operation to the first application. The operation information of the second operation includes type information and location information of the second operation. The first application is further used to determine, based on the operation information of the second operation, second window information and second description information that correspond to a third interface displayed after the first application responds to the second operation. The second description information of the first application indicates a location at which the second window information of the first application is stored in the memory of the electronic device. The first application is further used to send the second description information of the first application to the first operating system. The first operating system is further configured to: obtain the second window information of the first application from the memory of the electronic device based on the second description information of the first application, and display the third interface of the first application in the first window based on the second window information of the first application.

In a possible implementation of the second aspect, the first window includes a second control, and the second control is used to trigger closing of the first window. The first operating system is further configured to: in response to a third operation performed by the user on the second control, close the first window, and control the first application in the container to terminate running. Alternatively, the first operating system is further configured to: in response to a third operation performed by the user on the second control, close the first window, and control the first application in the container to keep running.

In a possible implementation of the second aspect, the first operating system is further configured to send, in response to a fourth operation performed by the user on the first window, operation information of the fourth operation to the first application. The fourth operation indicates an operation of zooming in or zooming out the first window by the user. The first application is further used to determine, based on the operation information of the fourth operation, fourth window information and fourth description information that correspond to a fourth interface displayed after the first application responds to the fourth operation. The fourth description information of the first application indicates a location at which the fourth window information of the first application is stored in the memory of the electronic device. The first application is further used to send the fourth description information of the first application to the first operating system. The first operating system is further configured to: obtain the fourth window information of the first application from the memory of the electronic device based on the fourth description information of the first application, and display the fourth interface of the first application in the first window based on the fourth window information of the first application.

In a possible implementation of the second aspect, the container further includes at least one other application applicable to the second operating system, and the container is used to provide a running environment of the second operating system for the at least one other application. The first interface further includes an application icon corresponding to the at least one other application, each of the other applications corresponds to one window created by the first operating system, and an interface of the other application is displayed in each window.

In a possible implementation of the second aspect, a mapping relationship is established between the first window and the first application. The first operating system is further configured to determine, based on the first window and the mapping relationship, the first application corresponding to the second interface. The first operating system is further configured to send the operation information of the second operation to the first application.

In a possible implementation of the second aspect, the first window information is determined by the first application according to a preset display protocol, and the first description information is sent by the first application to the first operating system according to the preset display protocol. In another possible implementation of the second aspect, the operation information of the second operation is sent by the first operating system to the first application according to a preset display protocol.

In a possible implementation of the second aspect, the first operating system is further configured to: receive a connection request sent by the first application according to the preset display protocol, and establish, in response to the connection request, a communication connection to the first application according to the preset display protocol.

In a possible implementation of the second aspect, the first operating system and the container share a kernel of the electronic device, and the first operating system and the container share the memory of the electronic device.

According to a third aspect, an electronic device is provided, including a storage and one or more processors. The storage is coupled to the processor. The storage stores computer program code, the computer program code includes computer instructions, and when the computer instructions are executed by the processor, the electronic device is enabled to perform the application window display method according to the first aspect and any one of the implementations of the first aspect.

According to a fourth aspect, a computer-readable storage medium is provided, including computer instructions. When the computer instructions are run on an electronic device, the electronic device is enabled to perform the application window display method according to the first aspect and any one of the implementations of the first aspect.

According to a fifth aspect, a computer program product is provided. When the computer program product runs on a computer, the computer is enabled to perform the application window display method according to the first aspect and any one of the implementations of the first aspect.

It may be understood that for beneficial effect that can be achieved by the electronic device according to the second aspect and the third aspect, the computer-readable storage medium according to the fourth aspect, and the computer program product according to the fifth aspect, refer to the beneficial effect in any one of the first aspect and the possible design manners of the first aspect. Details are not described herein again.

### BRIEF DESCRIPTION OF DRAWINGS

FIG. 1 is a diagram 1 of a structure of an electronic device according to an embodiment of this application;
FIG. 2 is a schematic flowchart 1 of an application window display method according to an embodiment of this application;
FIG. 3 is a diagram 2 of a structure of an electronic device according to an embodiment of this application;
FIG. 4 is a schematic flowchart 2 of an application window display method according to an embodiment of this application;
FIG. 5 is a diagram 1 of a first window on an electronic device according to an embodiment of this application;
FIG. 6 is a diagram 2 of a first window on an electronic device according to an embodiment of this application;
FIG. 7 is a diagram 3 of a first window on an electronic device according to an embodiment of this application;
FIG. 8 is a diagram of an application window on an electronic device according to an embodiment of this application; and
FIG. 9 is a diagram 3 of a structure of an electronic device according to an embodiment of this application.

### DESCRIPTION OF EMBODIMENTS

The following describes technical solutions in embodiments of this application with reference to accompanying drawings in embodiments of this application. In descriptions of this application, unless otherwise specified, "/" represents an "or" relationship between associated objects. For example, A/B may represent A or B. In this application, "and/or" describes only an association relationship between associated objects and represents that three relationships may exist. For example, A and/or B may represent the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, service scenarios described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with emergence of new service scenarios.

Currently, there are a plurality of operating systems (or referred to as application ecosystems) in the industry, such as MacOS^{®}, Windows^{®}, Linux^{®}, iOS^{®}, Android^{®}, and OpenHarmony^{®} (Harmony). With continuous integration of terminal device forms and user use scenarios, an operating system or an application ecosystem also develops toward integration and complementation. For example, a terminal device may include a host operating system (or a native operating system) and a virtual machine configured to run another operating system environment. The virtual machine includes an independent infrastructure configured to support running of the operating system, and further includes an application running in the operating system. On the terminal device, an application may be used across systems or displayed across ecosystem windows. To be specific, a user may view or operate, in an application window provided by the host operating system of the terminal device, an application provided by another operating system.

For example, when the Windows^{®} system side is compatible with an application window of the Linux^{®} system (that is, a window of a target application applicable to the Linux^{®} system is displayed on the Windows^{®} system side), a complete display software stack used to display the target application is reserved in a virtual machine configured to run the Linux^{®} system, the virtual machine configured to run the Linux^{®} system executes the display software stack, and completes processes such as window drawing, window management, and window composition of the target application. Then, the virtual machine configured to run the Linux^{®} system sends complete window information of the window of the target application to the Windows^{®} system. The Windows^{®} system receives the window information, and renders and displays the application window of the target application based on the window information. In addition, it may be understood that, in the virtual machine configured to run the Linux^{®} system, a process of execution of the display software stack is controlled based on a kernel of the Linux^{®} system. In the Windows^{®} system, an operation of the Windows^{®} system is controlled by a kernel of the Windows^{®} system. The window information is transmitted from the virtual machine configured to run the Linux^{®} system to the Windows^{®} system, which is equivalent to cross-system or cross-ecosystem transmission. In this way, the application window can be displayed across systems or ecosystems.

The complete display software stack is reserved in the virtual machine configured to run the Linux^{®} system. Inside the virtual machine configured to run the Linux^{®} system, the target application needs to execute the display software stack of the target application according to a display protocol (for example, a wayland protocol), and when the window information is transmitted across systems, the window information needs to be sent according to another display protocol (for example, an RDP protocol).

However, when the virtual machine configured to run the Linux^{®} system executes the display protocol, a processing cycle of the display protocol needs to be followed. When a time node of the processing cycle is reached, the virtual machine configured to run the Linux^{®} system sends the window information to the Windows^{®} system according to the RDP protocol.

The foregoing solution may also be referred to as a solution of windows subsystem for linux GUI program (windows subsystem for linux GUI, WSLg). In this solution, the window information is sent to the host operating system only after two display protocols (for example, the wayland protocol and the RDP protocol) are performed on the virtual machine side. Each display protocol has a corresponding processing cycle. Therefore, when the host operating system finally displays the application window, a large time delay (for example, at least two frames of delay) occurs. From a perspective of the user, window display freezes, and user experience is poor.

In addition, the virtual machine needs to send the complete window information (that is, image buffer content of the window) to the host operating system. This information transmission manner increases transmission bandwidth, and a transmission speed also becomes slow. This affects performance on the host operating system side. In addition, in this transmission manner, when sending the window information, the virtual machine needs to complete a memory read operation (that is, read the window information from a memory corresponding to the virtual machine). After receiving the window information, the host operating system needs to complete a memory write operation (that is, write the window information into a memory corresponding to the host operating system). Read and fetch processes on the two sides also increase information transmission duration and a time delay of displaying the application window.

In addition, the virtual machine and the host operating system need to separately manage application windows, and management of a same application window needs to be synchronized between the two sides. However, it is difficult to perform synchronous management on windows on two sides, and a problem that an application window displayed by the host operating system is abnormal easily occurs.

Based on the foregoing content, an embodiment of this application provides an application window display method. In the method, a first operating system of an electronic device controls, in response to a first operation performed by a user on an application icon of a first application in a first interface, the first application to run in a container; the first application sends first description information of the first application to the first operating system; and the first operating system receives the first description information of the first application, obtains first window information of the first application from a memory of the electronic device based on the first description information of the first application, and displays, based on the first window information of the first application, a second interface of the first application in a first window created by the first operating system.

The electronic device includes the first operating system and the container. The container includes a second operating system and the first application applicable to the second operating system, and provides a running environment of the second operating system for the first application. The electronic device displays the first interface. The first interface is an interface of the first operating system, and the first interface includes the application icon of the first application. The first description information of the first application indicates a location at which the first window information of the first application is stored in the memory of the electronic device, and the first window information of the first application is window information of a home page of the first application or an interface displayed before the first application is exited last time. In addition, it may be understood that window information may indicate image buffer content of a window.

The first application applicable to the second operating system runs in the container, and sends description information corresponding to the window information to the first operating system. The first operating system obtains the window information based on the description information and displays a corresponding interface. In this way, cross-system display of a window of the first application can also be implemented. In a cross-system transmission process of the window information, the first application sends only the description information of the window information to the first operating system, and the window information does not need to be sent or the image buffer content of the window does not need to be copied and transmitted. In this way, transmission bandwidth can be reduced, an information transmission speed can be increased, and performance on the first operating system side is also ensured. In addition, the description information is transmitted between the first application and the first operating system. Therefore, in a process of implementing cross-system transmission of the window information, the first application does not need to complete a memory read operation (that is, does not need to read the window information from the memory and send the window information to the first operating system), and the first operating system does not need to complete a memory write operation (that is, does not need to write the window information sent by the first application into the memory), and only needs to read the window information from the memory based on the description information on the first operating system side. In this way, a process of reading the memory on the first application side when the window information is sent is reduced, a process of writing the window information into the memory on the first operating system side when the window information is sent is reduced, and information transmission duration is also reduced. Correspondingly, a time delay of cross-system display of the application window is also reduced.

In addition, in some possible application scenarios, the first application can obtain the window information and send the description information according to only one preset display protocol. This is equivalent to reducing a processing period corresponding to the display protocol, so that a display time delay is reduced when the first operating system displays the application window. From the perspective of the user, a problem of window display freezing is alleviated and user experience is improved.

In addition, in the method in this embodiment of this application, the first application writes the window information into the memory of the electronic device, the first operating system reads the window information from the memory of the electronic device, and the first application (or the container) and the first operating system may share the memory of the electronic device. This manner may also be considered as that the first operating system manages the window of the first application in a unified manner. This centralized management manner of the application window greatly reduces difficulty in synchronously managing application windows on the container and the first operating system side, and ensures normal display of the windows on the first operating system side.

In some possible application scenarios, the application window display method in this embodiment of this application may be applied to an OpenHarmony^{®} (Harmony) system that is compatible with an application window of a Linux^{®} system, an OpenHarmony^{®} (Harmony) system that is compatible with an application window of a Windows^{®} system, and the like. Certainly, the method in this embodiment of this application may be further applied to a scenario in which an application window is compatible between other operating systems. This is not limited in embodiments of this application.

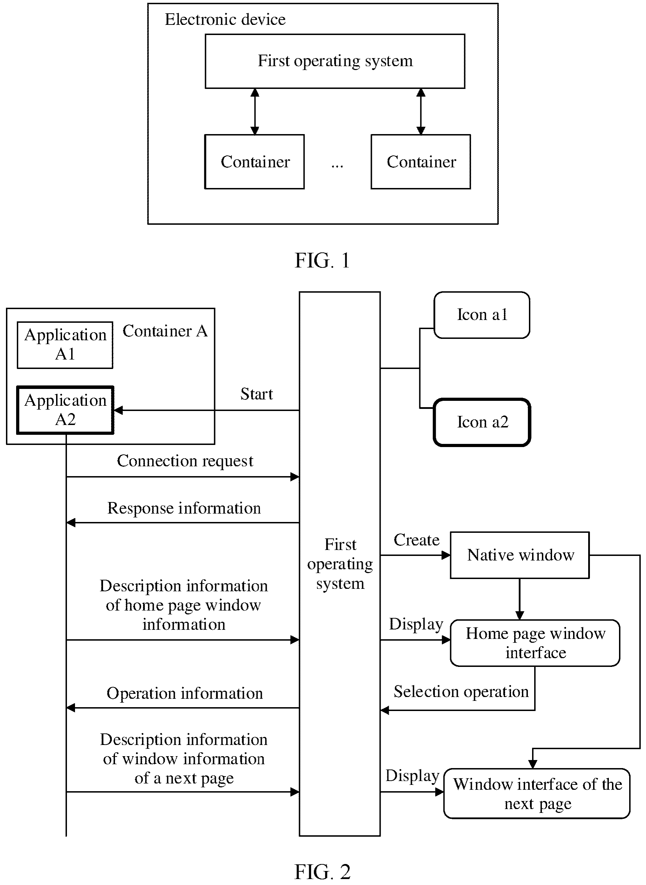

The application window display method provided in embodiments of this application may be applied to the electronic device. As shown in FIG. 1, the electronic device may include the first operating system and at least one container. The first operating system may represent a native operating system (or referred to as a native application ecosystem) of the electronic device, for example, a system configured when the electronic device is delivered from a factory, like the Linux^{®} system, the Windows^{®} system, or an Android^{®} system. The container may include at least one application (referred to as a containerized application below) applicable to the second operating system (or referred to as a second application ecosystem). The container runs the second operating system, and provides the running environment of the second operating system for the containerized application. The first operating system and an operating system included in the container may be the same, or may be different. In addition, in some possible application scenarios, if the first operating system is compatible with an application window of another operating system, the container and the first operating system may share a same kernel, or may not share a kernel. For example, if the OpenHarmony^{®} (Harmony) system is compatible with the application window of the Linux^{®} system, the container in the electronic device and the first operating system may share a same kernel.

It may be understood that an application applicable to the second operating system is an application that is developed by a developer for the second operating system and that adapts to the second operating system. In addition, a same application applicable to different operating systems can provide a same function, but configurations in an application development process may be different.

In addition, the second operating system running in the container is an operating system that does not include or display a graphical interface. When running the second operating system, the container does not need to run a graphical display service, and reserves only an application used to generate a graphical interface.

The first operating system runs in the electronic device. A function that can be experienced by the user on the electronic device is directly provided by the first operating system, and interaction between the user and the electronic device is also direct interaction with the first operating system. In addition, the first operating system may further provide a function of the containerized application for the user through communication and information transmission with the containerized application, and the like. For example, the first operating system may display a window corresponding to the containerized application, to implement cross-system or cross-ecosystem display of the application window. The containerized application that can be experienced by the user in the first operating system may include a media application (like a music application or a video application), an office application (like a text editor), a browser application, and the like.

In some possible application scenarios, when the electronic device configures each container, the first operating system may correspondingly obtain information about each application in each container, including an application name, an application identifier, an application icon, and the like. The first operating system may display, on a screen of the electronic device based on the information about each application in the container, an application icon and/or an application name corresponding to the containerized application. The user may select an application icon on the screen of the electronic device, to display, on the electronic device, an interface of the containerized application in the container.

In addition to displaying the application icon and/or the application name of the containerized application, the screen of the electronic device may further display an application icon and/or an application name of an application provided by the first operating system. The first operating system receives an operation event of the user on the screen, for example, tapping, touching, dragging, or double-tapping, and determines, based on a type of the operation event, an occurrence location, a location of an application icon displayed on the screen, and the like, whether the operation event is a selection operation on the application icon. If the operation event is the selection operation on the application icon, it is further determined whether an application corresponding to the selection operation is the application in the first operating system or the containerized application. If the application is the containerized application, the first operating system is responsible for starting a process of a corresponding application in the container, or controlling running of a corresponding application in the container. After the application runs in the container, the first operating system may display, on the screen, a window corresponding to the application, and interface content that matches a running status of the application is displayed in the window. The selection operation performed by the user on the application includes tapping, touching, double-tapping, and the like.

For example, as shown in FIG. 2, the electronic device includes the first operating system and a container A, and the container A includes an application A1 and an application A2. An icon a1 of the application A1 and an icon a2 of the application A2 are displayed on the electronic screen. If the user taps the icon a2 on the screen, the first operating system determines that an application corresponding to the selection operation is A2, and the application A2 is from the container A. Then, the first operating system starts a process and the like of the corresponding application A2 in the container A, to control the application A2 to start running.

In some possible application scenarios, when the containerized application is running, processes such as application window drawing, application window management, and application window composition are performed according to a preset display protocol, to obtain the window information corresponding to the application window, and the window information corresponding to the application window is stored in the memory of the electronic device. In addition, description information indicating a storage location of the window information is obtained, and the description information is sent to the first operating system according to the preset display protocol. The preset display protocol corresponds to the second operating system to which the containerized application is applicable. For example, if the containerized application is applicable to the Linux^{®} system, the preset display protocol may be a wayland protocol, an X11 protocol, or the like.

In some other possible application scenarios, after the containerized application starts to run, the containerized application sends a connection request to the first operating system according to the preset display protocol, to request to establish a communication connection to the first operating system according to the preset display protocol. After receiving the connection request, the first operating system sends response information to the containerized application, to notify the containerized application that the communication connection according to the preset display protocol has been established. When the communication connection has been established, the containerized application first sends the first description information to the first operating system according to the preset display protocol. The first description information indicates a storage location of the first window information of the containerized application in the memory of the electronic device, and the first window information indicates window information of a home page of the containerized application or an interface displayed before the containerized application exits last time. After receiving the first description information, the first operating system obtains the first window information from the memory of the electronic device based on the first description information, and displays, in a created native window based on the first window information, the interface corresponding to the containerized application.

For example, FIG. 2 is still used as an example. After the application A2 starts to run, the application A2 sends an X11 protocol-based connection request to the first operating system. The first operating system receives the connection request, and after agreeing to establish a communication connection to the application A2, the first operating system sends response information to the application A2. Then, the application A2 sends, to the first operating system according to the X11 protocol, description information corresponding to home page window information of the application A2. The first operating system can create a native window corresponding to the application A2, obtain the home page window information of the application A2 from the memory based on the description information, and then display, in the native window based on the home page window information, a home page window interface corresponding to the application A2.

In some possible application scenarios, after the first operating system displays the interface corresponding to the containerized application, the user may further continue to perform a selection operation on a control or the like in the interface. The first operating system may receive the selection operation of the user, and send, to the containerized application in response to the selection operation, operation information corresponding to the selection operation. The operation information includes operation information of the selection operation, for example, type information or location information. The type information indicates whether the selection operation is tapping, double-tapping, touching, or dragging. The location information indicates a location of the selection operation, for example, a tap location, a double-tap location, a touch location, and a drag track. After receiving the operation information of the selection operation, the containerized application determines specific operation content, an intent, and the like of the user based on the operation information of the selection operation, further determines a next running progress or running status of the containerized application and second window information corresponding to the running status, and stores the second window information in the memory of the electronic device. In addition, second description information indicating a location for storing the information about the second window is obtained, and the second description information is sent to the first operating system. The first operating system continues to obtain the second window information from the memory of the electronic device based on the second description information, and displays, in the native window, an interface corresponding to a new containerized application.

For example, FIG. 2 is still used as an example. After the first operating system displays, in the native window, home page window content corresponding to the application A2, the user may tap a "Next page" control on the home page window content, to perform a selection operation on the home page window content. Then, the first operating system receives the selection operation of the user, and sends operation information of the selection operation to the application A2. The operation information may include type information (for example, tapping), location information of the selection operation (for example, coordinate information of the tap operation in the native window), and the like. The application A2 determines, based on the type information (for example, tapping) of the selection operation, the location information of the selection operation (for example, coordinate information of the tap operation in the native window), and the like, that content tapped by the user is the "Next page" control in the home page window content, obtains window information of a next page of a home page of the application A1 and corresponding description information, and sends the description information to the first operating system. Then, the first operating system obtains the window information of the next page based on the description information, and continues to display, in the native window based on the window information of the next page, a window interface of a next page of a home page of the application A2.

In some possible application scenarios, in a process of transmitting subsequent operation information and other description information, transmission between the containerized application and the first operating system may also be performed according to the preset display protocol. In addition, it may be understood that, in this embodiment of this application, the preset display protocol for obtaining the window information by the containerized application is the same as the preset display protocol for transmitting information between the containerized application and the first operating system.

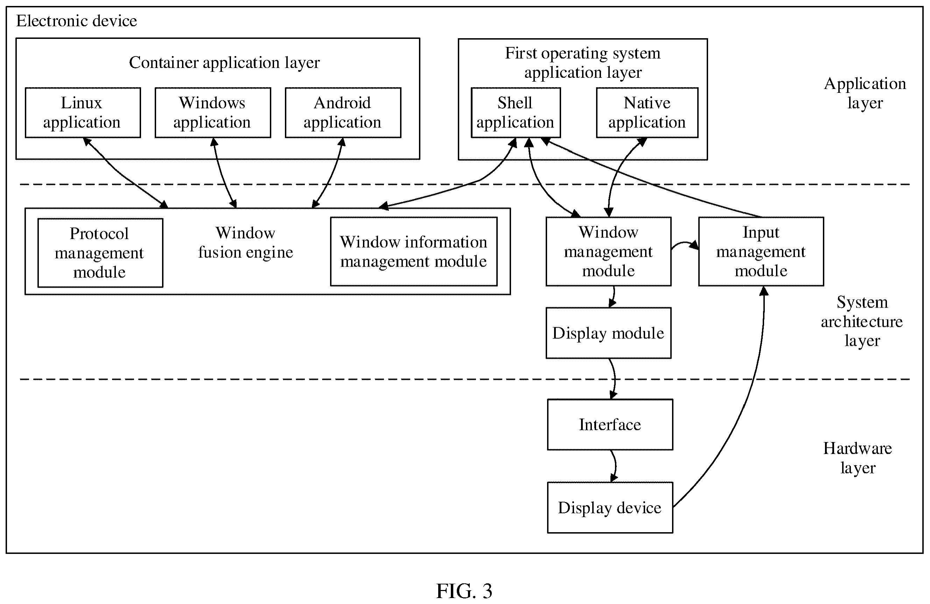

In addition, in some other possible application scenarios, as shown in FIG. 3, the electronic device may include an application layer, a system architecture layer, and a hardware layer. The application layer includes a containerized application layer and a first operating system application layer.

The containerized application layer includes at least one containerized application. Application containers from a same container are applicable to a same operating system. The containerized application may include at least a Linux^{®} application, a Windows^{®} application, an Android^{®} application, and the like. In addition, containerized applications from different containers are applicable to a same operating system, or are applicable to different operating systems.

The first operating system application layer includes a shell application and a native application provided by the first operating system. The shell application may manage applications in the container in a unified manner, for example, manage an application icon of a containerized application in a container. The shell application may be responsible for identifying a containerized application corresponding to an application icon on which the selection operation of the user is performed, starting a process of the corresponding application in the container, and controlling running of the containerized application. After starting to run, the containerized application sends, to the first operating system, the first description information corresponding to the first window information.

The system architecture layer includes a window fusion engine (window fusion engine), a window manager module (window manager service, WMS), an input manager module (input manager service, IMS), a display module (or referred to as a render service module (render service)), and the like in the first operating system.

The window fusion engine may receive a request, data, description information, and the like that are sent by the containerized application, for example, receive the first description information sent by the containerized application. The window fusion engine may also send an operation event, event information, and the like of the containerized application managed by the shell application on the first operating system side to a corresponding application in the container, to implement information synchronization between the container and the first operating system. For example, after the first operating system displays the interface of the containerized application on the screen, if the user performs a selection operation on a control in the interface, the window fusion engine sends the selection event and the event information of the user to the corresponding containerized application.

For example, the window fusion engine may include a protocol management module, a window information management module, and the like. The protocol management module may interface with a display protocol of each containerized application in the container, and the display protocol of the containerized application matches an applicable operating system. For example, if the containerized application is applicable to an operating system Linux^{®}, the display protocol of the containerized application may include the wayland protocol, the X11 protocol, and the like. In addition, the protocol management module may further obtain an occasion for creating, maximizing, minimizing, or destroying a window of the containerized application on the first operating system side and a corresponding operation event or selection event, and synchronize the received operation event and event information to the corresponding containerized application according to display protocols of different containerized applications.

The window information management module may maintain description information of each containerized application, and may interface with the shell application. The window fusion engine may store the received description information of the containerized application in the window information management module, and then the shell application obtains the description information of the containerized application from the window information management module, and obtains the corresponding window information from the memory based on the description information.

The window management module may manage a window corresponding to at least one containerized application displayed on the screen and a window of a native application, and provide capabilities such as window creation, destruction, attribute setting, and Z-order (for example, a location of each window when windows are stacked) control, and provides information about the window displayed on the screen to the input management module. The input management module receives an input event or an operation event at a bottom layer (for example, a hardware layer), distributes the input event or the operation event, and provides the input event or the operation event and corresponding information for the shell application. The window fusion engine obtains the input event or the operation event and the corresponding information from the shell application, and sends the event and the corresponding information to the containerized application. The display module may manage a display device (for example, a screen), display, on the display device, the window corresponding to the containerized application and a window corresponding to the native application provided by the first operating system, and display the interface of the containerized application in the corresponding window based on window information of the containerized application.

The hardware layer includes a hardware device interface (hardware device interface, HDI), a display device (for example, a screen) of the electronic device, and the like. The HDI interfaces with southbound interfaces of different hardware devices, for example, interfaces with a southbound interface of the screen.

When the application window display method provided in this embodiment of this application is implemented based on the foregoing electronic device, the shell application may start a process of a corresponding containerized application on the first operating system side when the containerized application is used across systems or ecosystems. In this case, the first operating system obtains the description information sent by the containerized application, obtains the corresponding window information from the memory of the electronic device based on the description information, and displays, in the native window created on the screen based on the window information, the interface corresponding to the containerized application. In this way, the user may experience an application of another operating system across systems or ecosystems on the first operating system side, or may experience "seamless" switching of a containerized application window from the container side to the first operating system side on the first operating system side.

In a cross-system transmission process of the window information, the containerized application sends only the description information of the window information to the first operating system, and the window information does not need to be sent or the image buffer content of the window does not need to be copied and transmitted. In this way, transmission bandwidth can be reduced, an information transmission speed can be increased, and performance on the first operating system side is also ensured. In addition, the description information is transmitted between the containerized application and the first operating system. Therefore, in a process of implementing cross-system transmission of the window information, the containerized application does not need to complete a memory read operation (that is, does not need to read the window information from the memory and send the window information to the first operating system), and the first operating system does not need to complete a memory write operation (that is, does not need to write the window information sent by the first application into the memory), and only needs to read the window information from the memory based on the description information on the first operating system side. In this way, a process of reading the memory on the first application side when the window information is sent is reduced, a process of writing the window information into the memory on the first operating system side when the window information is sent is reduced, and information transmission duration is also reduced. Correspondingly, a time delay of cross-system display of the application window is also reduced.

In addition, the containerized application can obtain the window information and send the description information according to a preset display protocol. This is equivalent to reducing a processing period corresponding to the display protocol, so that a display time delay is reduced when the first operating system displays the application window. From the perspective of the user, the problem of window display freezing is alleviated and user experience is improved.

In addition, the window application writes the window information into the memory of the electronic device, the first operating system reads the window information from the memory of the electronic device, and the window application (or the container) and the first operating system may share the memory of the electronic device. This manner may also be considered as that the first operating system manages the window of the first application in a unified manner. This centralized management manner of the application window greatly reduces difficulty in synchronously managing the application windows on the container side and the first operating system side, and ensures normal display of the windows on the first operating system side.

The electronic device in this embodiment of this application may be a terminal device that can carry the first operating system (for example, a host operating system) and support different containers, for example, a desktop computer, a notebook computer, a tablet computer, or a mobile phone.

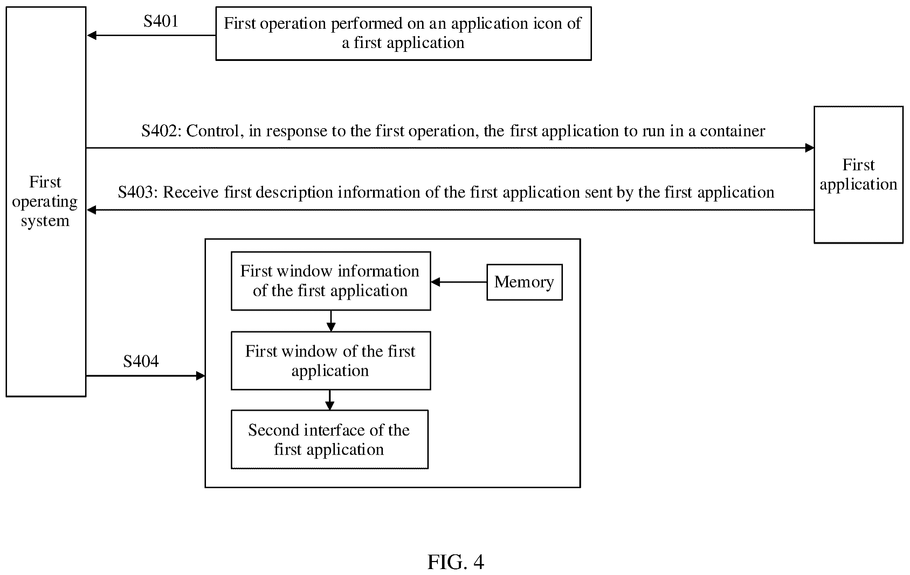

Refer to FIG. 4. When the application window display method provided in this embodiment of this application is applied to the foregoing electronic device, the method may include the following steps S401 to S404. The electronic device includes a first operating system and a container, the container includes a first application applicable to a second operating system, and the container is used to provide a running environment of the second operating system for the first application.

S401: The first operating system receives a first operation performed by a user on an application icon of the first application in a first interface.

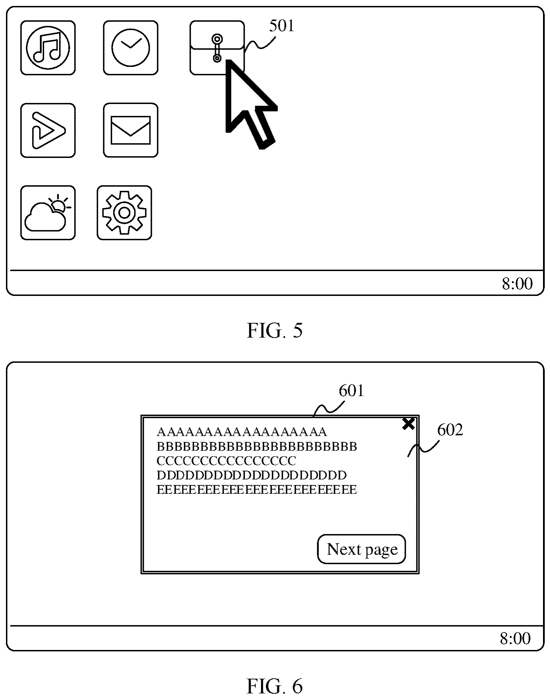

In some embodiments, the electronic device may display the first interface corresponding to the first operating system, and the first operating system may display an application icon of at least one containerized application on the electronic device in the first interface. The at least one containerized application includes the first application, so that the first operating system may display, to the user, applications that can be used on the electronic device, for example, as shown in FIG. 5. From a perspective of the user, when the user wants to select an application to run, the user may perform the first operation on the application. In some possible application scenarios, the first operation may include one or more operations of tapping, double-tapping, and touching. For example, the user performs a double-tap operation on the first application 501 in FIG. 5, to select to start the first application 501.

S402: The first operating system controls, in response to the first operation, the first application to run in the container.

The first operating system obtains the first operation of the user, and determines the first application selected by the user, or determines the first application corresponding to the first operation, to control running of the first application in the container.

In some embodiments, when the first application runs in the container, the first application runs according to a preset display protocol, for example, completes processes such as window drawing, window management, and window composition, and obtains, in a running process, window information that matches a running status. Then, the first application stores the window information in a memory of the electronic device, and obtains description information of the window information. The description information indicates a location or an address at which the window information is stored in the memory of the electronic device. The preset display protocol matches the second operating system to which the first application is applicable. For example, if the second operating system to which the first application is applicable is a Linux^{®} system, the preset display protocol corresponding to the first application may be a general protocol like a wayland protocol or an X11 protocol.

S403: The first operating system receives first description information of the first application sent by the first application.

In some embodiments, after the first application runs in the container, the first application first sends, to the first operating system according to the preset display protocol, the first description information of first window information that matches a current running status. For example, because the first operation indicates an operation performed by the user on the application icon of the first application, it may be considered that the user selects to start the first application for the first time. In this case, after the first application starts to run, a home page window and home page window information of the first application are first obtained, and the home page window information is stored in the memory of the electronic device. In addition, description information of the home page window information is obtained, and then description information corresponding to the home page window of the first application is sent to the first operating system according to the wayland protocol. Alternatively, the first operation indicates an operation performed by the user on the application icon of the first application, and it may also be considered that the user selects to start, again, the first application that has been minimized or suspended. In this case, the first application may obtain window information of an interface displayed before the first application exits last time, and determine description information corresponding to the window information. Then, the description information is sent to the first operating system according to the wayland protocol.

In some embodiments, different containerized applications may correspond to different preset display protocols. When different preset display protocols are used for communication, corresponding communication connections need to be established, to ensure that the first application can normally communicate with the first operating system and transmit description information. For example, after starting to run, the first application sends a connection request to the first operating system according to the preset display protocol. After receiving the connection request, if the first operating system agrees to establish the communication connection to the first application, the first operating system establishes the communication connection to the first application, and sends response information to the first application. After receiving the response information, the first application sends the first window information to the first operating system again according to the preset display protocol.

S404: The first operating system obtains the first window information of the first application from the memory of the electronic device based on the first description information of the first application, and displays, based on the first window information of the first application, a second interface of the first application in a first window created by the first operating system.

In some embodiments, after receiving the first operation, the first operating system may create the first window (or a native window) corresponding to the first application. Alternatively, the first window corresponding to the first application may be created after the communication connection to the first application is established, or the first window corresponding to the first application may be created after the first description information sent by the first application is received. An occasion for creating the first window is not specifically limited in this embodiment of this application.

In some embodiments, an example in which an OpenHarmony^{®} (Harmony) system is compatible with an application window of the Linux^{®} system is used. The containerized application in the electronic device is applicable to a case in which the second operating system is the Linux^{®} system, and the first operating system is the OpenHarmony^{®} (Harmony) system. In this case, the container and the first operating system may share one kernel of the electronic device, that is, a same kernel controls execution processes of the first operating system and the container. When the container and the first operating system share the kernel, the container and the first operating system may also share the memory of the electronic device. In other words, both the first operating system and the containerized application may obtain data or information from a same memory.

In view of this, the first application may store corresponding window information, for example, the first window information, in the memory shared with the first operating system, and obtain the first description information (or pointer information) indicating a storage location (or an address) of the first window information. In addition, after obtaining the first description information, the first operating system may obtain the first window information from a corresponding location in the shared memory based on the first description information. In this way, during information transmission between the first application and the first operating system, specific information content does not need to be transmitted, and only the description information needs to be transmitted, so that zero-copy transmission of the window information can be implemented, a waste of transmission bandwidth can be reduced, an information transmission speed can be increased, and performance on the first operating system side is also ensured.

In some embodiments, after obtaining the first window information of the first application, the first operating system may render the first window based on the first window information, to display, in the first window, the second interface corresponding to the first application; or the first operating system displays the second interface in the first window based on the first window information. For example, as shown in FIG. 6, if the first window information indicates the home page window of the first application, a second interface 602 displayed in a first window 601 created by the first operating system is content of the home page window of the first application. In this way, the first operating system can implement cross-system or cross-ecosystem window display or window convergence of an application, so that the user can use, on the first operating system side, an application provided by another operating system, to improve user experience.

It can be learned from the foregoing content that, in the application window display method provided in this embodiment of this application, in a cross-system transmission process of window information, the first application sends only the description information of the window information to the first operating system, and the window information does not need to be sent or the image buffer content of the window does not need to be copied and transmitted. In this way, transmission bandwidth can be reduced, an information transmission speed can be increased, and performance on the first operating system side is also ensured. In addition, the description information is transmitted between the first application and the first operating system. Therefore, in a process of implementing cross-system transmission of the window information, the first application does not need to complete a memory read operation (that is, does not need to read the window information from the memory and send the window information to the first operating system), and the first operating system does not need to complete a memory write operation (that is, does not need to write the window information sent by the first application into the memory), and only needs to read the window information from the memory based on the description information on the first operating system side. In this way, a process of reading the memory on the first application side when the window information is sent is reduced, a process of writing the window information into the memory on the first operating system side when the window information is sent is reduced, and information transmission duration is also reduced. Correspondingly, a time delay of cross-system display of the application window is also reduced.

In addition, in some cases, the first application can obtain the window information and send the description information according to a preset display protocol. This is equivalent to reducing a processing period corresponding to the display protocol, so that a display time delay is reduced when the first operating system displays the application window. From the perspective of the user, the problem of window display freezing is alleviated and user experience is improved.

In addition, in the method in this embodiment of this application, the first application writes the window information into the memory of the electronic device, the first operating system reads the window information from the memory of the electronic device, and the first application (or the container) and the first operating system may share the memory of the electronic device. This manner may also be considered as that the first operating system manages the window of the first application in a unified manner. This centralized management manner of the application window greatly reduces difficulty in synchronously managing application windows on the container and the first operating system side, and ensures normal display of the windows on the first operating system side.

In some embodiments, the second interface of the first application may include at least one control. After the first operating system displays the second interface of the first application, the user may further perform a further operation based on the second interface, for example, tap a first control in the at least one control in the second interface. The operation may also be used as a second operation of the user. In this case, the first operating system obtains the second operation, and sends, to the first application according to the preset display protocol in response to the second operation, operation information corresponding to the second operation, for example, type information or location information. After receiving the operation information of the selection operation, the first application determines specific operation content, an intent, and the like of the user based on the operation information, further determines a next running progress or a running status of the first application, obtains second window information of a third interface corresponding to the next running progress or the running status, and stores the second window information in the memory of the electronic device. In addition, second description information of the second window information is obtained. Then, the first application sends the second description information to the first operating system. The first operating system obtains the second window information from the memory of the electronic device based on the second description information, and continues to display, in the first window based on the second window information, the corresponding third interface, that is, interface content corresponding to the current running status of the first application.

The second operation may include operations such as tapping, double-tapping, touching, and dragging. Type information of the second operation indicates whether the selection operation is tapping, double-tapping, touching, or dragging, or the type information of the second operation includes types such as tapping, double-tapping, touching, and dragging. The location information of the second operation indicates a location of the selection operation, for example, a tap location, a double-tap location, a touch location, or a drag track.

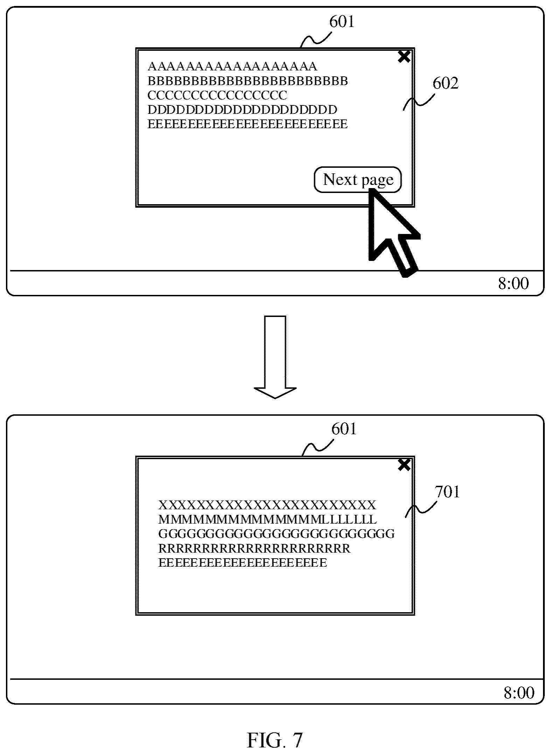

For example, the user taps a "Next page" control in the second interface 602 of the first window 601 shown in FIG. 6, to input the second operation to the electronic device. The first operating system receives the second operation, and sends the operation information like the type information and the location information of the operation to the first application. The type information includes tapping, and the location information includes coordinate information, of a location at which the user performs a tap operation, in the first window. The first application determines, based on the received operation information, that the user taps the "Next page" control in the second interface of the first window, to continue to obtain second window information of the first application on a next page of the first page, and send second description information corresponding to the second window information to the first operating system. In this case, the first operating system obtains the second window information based on the second description information, and continues to display, in the first window 601 based on the second window information, a third interface 701 indicating window content of a next page of the first application, as shown in FIG. 7.

In some possible application scenarios, after creating the first window corresponding to the first application, the first operating system sends window attribute information of the first window to the first application. The window attribute information may include a window size and the like, so that the first application can establish and determine a coordinate system of the first window based on the window size. In this way, after receiving the location information of the selection operation, the first application determines, based on coordinate information of the selection operation in the first window, the coordinate system of the first window, and interface content currently displayed in the first window, a target of the selection operation, or determines specific content or a specific control in the first window on which the user performs the selection operation, and then determines window information that needs to be further obtained.

In some possible application scenarios, the second operation may be any selection operation other than the first operation, and the selection operation may be an operation on any interface content displayed in the first window corresponding to the first application. This is not specifically limited in this embodiment of this application. Correspondingly, the second description information sent by the first application to the first operating system based on the second operation may also be description information of any window or interface corresponding to the first application. Alternatively, the second description information may be description information of a window or an interface corresponding to the first application in any running status. In this case, the running status of the first application is related to the second operation performed by the user on the first operating system side.

In the foregoing embodiment, the second interface corresponding to the first application may be displayed on the first operating system side. The user may experience an application of another operating system across systems or ecosystems on the first operating system side, or may experience "seamless" switching of a containerized application window from the container side to the first operating system side on the first operating system side.

In some embodiments, the user may further perform another selection operation on the first window displayed on the first operating system side, for example, close the first window. In this case, the first window may include a second control, the user may perform a third operation on the second control, and the first operating system may further close the first window in response to receiving the third operation of the user. When the first window is closed, the first operating system may further display prompt information, to ask the user whether to stop the first application or minimize the first window. If the user selects to minimize the window, the first operating system does not control the first application to terminate running, but still maintains the running status of the first application, and closes the first window in the first interface. In this case, an application icon of a zoomed-out application icon of the first application or an application icon thumbnail may be displayed on a toolbar or a status bar in the interface. When the user performs an operation on the application icon of the first application again, or selects to restore the first window of the first application (that is, performs an operation on the application icon on the toolbar or the status bar), the first operating system continues to display the second interface in the first window. If the user selects to stop the first application, the first operating system controls the first application to terminate running. When the user performs an operation on the application icon of the first application again, the first operating system re-creates the first window of the first application and displays the second interface.

In some embodiments, the user may further perform a fourth operation like zooming in, zooming out, or maximizing the first window. In this case, the first operating system sends operation information corresponding to the fourth operation to the first application, and the first application determines a specific operation of the user based on the operation information, for example, a size to which the first window is zoomed in or a size to which the first window is zoomed out, determines, based on the specific operation of the user, a fourth interface or included interface content that may correspond to the first window after the first window is zoomed in or out, and obtains corresponding fourth window information. Then, the first application stores the fourth window information in the memory of the electronic device, obtains fourth description information indicating a storage location of the fourth window information, and sends the fourth description information to the first operating system. The first operating system obtains the fourth window information from the memory of the electronic device based on the fourth description information, and displays the corresponding fourth interface in the zoomed-in or zoomed-out first window based on the fourth window information.

In some embodiments, the user may select a plurality of containerized applications on the first operating system side. For example, in addition to the first application, the container may further include another application like a second application or a third application. In other words, the container may further provide a running environment for the another application. In addition, an application icon corresponding to the another application may be further displayed in the first interface of the electronic device. The first operating system may create an application window corresponding to the another application, and display an interface of a corresponding application in the application window.

For example, the first operating system may further receive a first operation performed by the user on an application icon of the second application in the first interface, and control, in response to the first operation, the second application to run in the container. In some possible application scenarios, after the second application starts to run in the container, the first window information that matches the running status is obtained. Then, the second application stores the first window information in the memory of the electronic device, and obtains the first description information of the first window information. The first description information indicates a location or an address at which the first window information is stored in the memory of the electronic device. The preset display protocol matches the second operating system to which the second application is applicable. For example, if the second operating system to which the second application is applicable is the Linux^{®} system, the preset display protocol corresponding to the second application may be a general protocol like the wayland protocol or the X11 protocol. Then, the first operating system receives the first description information of the second application sent by the second application. The first description information of the second application indicates a location at which the first window information of the second application is stored in the memory of the electronic device. The first operating system obtains the first window information of the second application from the memory of the electronic device based on the first description information of the second application, and displays, based on the first window information of the second application, an interface of the second application in the second window created by the first operating system.

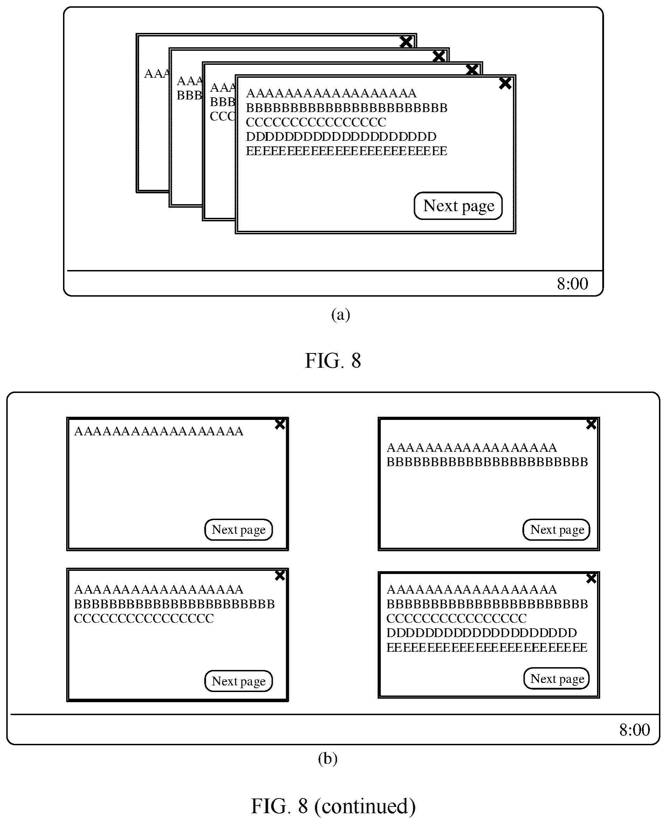

For example, after selecting to start a containerized application 1, the user may continue to select to start a containerized application 2, and after selecting the containerized application 2, the user may continue to select to start a containerized application 3. If the user selects to start a plurality of containerized applications, a plurality of application windows may also be created on the first operating system side, to be specific, each application corresponds to one application window, and application windows are sequentially created according to a sequence in which corresponding containerized applications are selected. As shown in (a) in FIG. 8, after creating the plurality of application windows, the first operating system may display the application windows in a stacking manner according to a creation sequence of the application windows. An application window that is first created is displayed at a bottom layer, and a subsequently created application window is stacked on a previously created application window for display. Alternatively, as shown in (b) in FIG. 8, the first operating system may further display the plurality of created application windows in a tile manner, and distribute the plurality of created application windows on a screen.

In some other embodiments, to avoid a case in which the first operating system cannot accurately identify a containerized application corresponding to each application window after creating the plurality of application windows, the first operating system may separately establish a mapping relationship between each application window and the corresponding containerized application. When the first operating system sends the operation information of the second operation to the first application, the first operating system may determine, based on the second interface corresponding to the first application and a pre-established mapping relationship, the first application corresponding to the second interface, and then send the operation information of the second operation to the first application after determining the first application.

Alternatively, when the user performs a selection operation on a target window in the plurality of application windows or interface content displayed in a target window, the first operating system may first identify, in response to the selection operation of the user, the target window selected by the user, and then determine, based on the target window and the mapping relationship, a containerized application corresponding to the selection operation or a containerized application corresponding to the target window. The first operating system sends operation information corresponding to the selection operation to the determined containerized application. Then, the containerized application determines corresponding second window information based on the operation information, and sends second description information corresponding to the second window information to the first operating system. The first operating system obtains the second window information based on the second description information, and displays, in the corresponding target window based on the second window information, an interface corresponding to the containerized application. The operation information includes type information and location information of the operation.

In the foregoing embodiment, the user may select to start a plurality of containerized applications on the screen, and the screen may display interfaces respectively corresponding to the plurality of containerized applications selected by the user. It can be learned that the user may experience applications of a plurality of other operating systems across systems or ecosystems on the first operating system side, or experience "seamless" switching of the containerized application window from the container side to the first operating system side on the first operating system side.

It may be understood that, as shown in the following Table 1, after the application window display method in this embodiment of this application is used, a delay time of the application window displayed by the electronic device is greatly reduced compared with that in the conventional technology. For example, in the conventional technology, there may be a delay of at least two frames in displaying the application window, and a delay time is approximately 33.33 ms, whereas in this embodiment of this application, there may be a delay of at least one frame for displaying the application window, and the delay time is approximately 16.67 ms. In addition, based on the display delay time in the conventional technology, a refresh rate of a single application window corresponding to a containerized application in the conventional technology is approximately 1s/33.33 ms ≈ 30 Hz, whereas based on the display delay time in this embodiment of this application, a refresh rate of a single application window corresponding to the containerized application may reach approximately 1s/16.67 ms ≈ 60 Hz. It can be learned that, in comparison with the conventional technology, in this embodiment of this application, performance of displaying the application window by the electronic device is greatly improved.

**Table 1**

| Solution | Display delay | Zero-copy transmission of window information | Single-window refresh rate |
|---|---|---|---|
| Conventional technology | 33.33 ms | Not supported | 30 Hz |
| This embodiment of this application | 16.67 ms | Supported | 60 Hz |

It may be understood that a display protocol that can be executed by the first operating system in this embodiment of this application is the same as or matches the preset display protocol of the operating system to which the containerized application is applicable, and is preconfigured based on the preset display protocol of the operating system to which the containerized application is applicable.

In some solutions, a plurality of embodiments of this application may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution order is the only order in which these operations can be performed. A person of ordinary skill in the art may figure out a plurality of manners to re-rank the operations described in embodiments of this application. In addition, it should be noted that process details in an embodiment of this application are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the method embodiments may be implemented separately or in combination.

It may be understood that, to implement the foregoing functions, the electronic device includes a corresponding hardware and/or software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each specific application with reference to embodiments. However, it should not be considered that the implementation goes beyond the scope of this application.

In this embodiment, the electronic device may be divided into functional modules based on the foregoing method examples. For example, each functional module corresponding to each function may be obtained through division, or two or more functions may be integrated into one processing module. The integrated module may be implemented in a form of hardware. It should be noted that module division in embodiments is an example and is merely logical function division. During actual implementation, there may be another division manner.

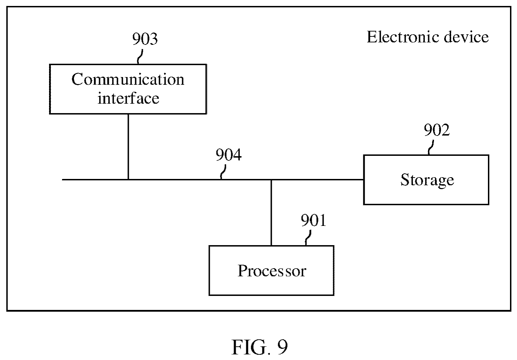

An embodiment of this application further provides an electronic device. As shown in FIG. 9, the electronic device may include one or more processors 901, a storage 902, and a communication interface 903. The storage 902, the communication interface 903, and the processor 901 are coupled to each other. For example, the storage 902, the communication interface 903, and the processor 901 may be coupled through a bus 904.

The communication interface 903 is configured to perform data transmission with another device. The storage 902 stores computer program code. The computer program code includes computer instructions. When the computer instructions are executed by the processor 901, the electronic device is enabled to perform the application window display method in embodiments of this application. The processor 901 may be a processor or a controller, for example, may be a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The processor may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The bus 904 may be a peripheral component interconnect standard (peripheral component interconnect, PCI) bus, an extended industry standard architecture (extended industry standard architecture, EISA) bus, or the like. The bus 904 may be classified into an address bus, a data bus, a control bus, and the like. For ease of representation, only one thick line is used to represent the bus in FIG. 9, but this does not mean that there is only one bus or only one type of bus.

An embodiment of this application further provides a computer-readable storage medium. The computer-readable storage medium stores computer program code. When the processor executes the computer program code, the electronic device performs related method steps in the foregoing method embodiments.

An embodiment of this application further provides a computer program product. When the computer program product runs on a computer, the computer is enabled to perform related method steps in the foregoing method embodiments.

The electronic device, the computer storage medium, or the computer program product provided in this application is configured to perform the corresponding method provided above. Therefore, for beneficial effect that can be achieved by the electronic device, the computer storage medium, or the computer program product, refer to the beneficial effect in the corresponding methods provided above. Details are not described herein again.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or the communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part making a contribution, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application window display method, applied to a first operating system of an electronic device, wherein the electronic device further comprises a container, the container comprises a second operating system and a first application applicable to the second operating system, the container is used to provide a running environment of the second operating system for the first application, the electronic device displays a first interface, the first interface is an interface of the first operating system, and the first interface comprises an application icon of the first application; and
the method comprises:
controlling, by the first operating system in response to a first operation performed by a user on the application icon of the first application in the first interface, the first application to run in the container;
receiving, by the first operating system, first description information of the first application sent by the first application, wherein the first description information of the first application indicates a location at which first window information of the first application is stored in a memory of the electronic device, and the first window information of the first application is window information of a home page of the first application or an interface displayed before the first application is exited last time; and
obtaining, by the first operating system, the first window information of the first application from the memory of the electronic device based on the first description information of the first application, and displaying, based on the first window information of the first application, a second interface of the first application in a first window created by the first operating system.

2. The method according to claim 1, wherein the second interface comprises a first control; and
the method further comprises:
sending, by the first operating system in response to a second operation performed by the user on the first control in the second interface, operation information of the second operation to the first application, wherein the operation information of the second operation comprises type information and location information of the second operation, the operation information of the second operation is used by the first application to determine second window information and second description information that correspond to a third interface displayed after the first application responds to the second operation, and the second description information of the first application indicates a location at which the second window information of the first application is stored in the memory of the electronic device;
receiving, by the first operating system, the second description information of the first application sent by the first application; and
obtaining, by the first operating system, the second window information of the first application from the memory of the electronic device based on the second description information of the first application, and displaying the third interface of the first application in the first window based on the second window information of the first application.

3. The method according to claim 1 or 2, wherein the first window comprises a second control, the second control is used to trigger closing of the first window, and the method further comprises:
in response to a third operation performed by the user on the second control, closing, by the first operating system, the first window, and controlling the first application in the container to terminate running; or
in response to a third operation performed by the user on the second control, closing, by the first operating system, the first window, and controlling the first application in the container to keep running.

4. The method according to any one of claims 1 to 3, wherein the method further comprises:
sending, by the first operating system in response to a fourth operation performed by the user on the first window, operation information of the fourth operation to the first application, wherein the fourth operation indicates an operation of zooming in or zooming out the first window by the user, the operation information of the fourth operation is used by the first application to determine fourth window information and fourth description information that correspond to a fourth interface displayed after the first application responds to the fourth operation, and the fourth description information of the first application indicates a location at which the fourth window information of the first application is stored in the memory of the electronic device;
receiving, by the first operating system, the fourth description information of the first application sent by the first application; and
obtaining, by the first operating system, the fourth window information of the first application from the memory of the electronic device based on the fourth description information of the first application, and displaying the fourth interface of the first application in the first window based on the fourth window information of the first application.

5. The method according to any one of claims 1 to 4, wherein the container further comprises at least one other application applicable to the second operating system, the container is used to provide a running environment for the at least one other application, the first interface further comprises an application icon corresponding to the at least one other application, each of the other applications corresponds to one window created by the first operating system, and an interface of the other application is displayed in each window.

6. The method according to claim 2, wherein a mapping relationship is established between the first window and the first application, and sending, by the first operating system in response to the second operation performed by the user on the first control in the second interface, the operation information of the second operation to the first application comprises:
determining, by the first operating system based on the first window and the mapping relationship, the first application corresponding to the second interface; and
sending, by the first operating system, the operation information of the second operation to the first application.

7. The method according to any one of claims 1 to 6, wherein the first window information is determined by the first application according to a preset display protocol, and the first description information is sent by the first application to the first operating system according to the preset display protocol.

8. The method according to claim 2, wherein the operation information of the second operation is sent by the first operating system to the first application according to a preset display protocol.

9. The method according to claim 7 or 8, wherein before receiving, by the first operating system, the first description information of the first application sent by the first application, the method further comprises:
receiving, by the first operating system, a connection request sent by the first application according to the preset display protocol; and
establishing, by the first operating system in response to the connection request, a communication connection to the first application according to the preset display protocol.

10. The method according to any one of claims 1 to 9, wherein the first operating system and the container share a kernel of the electronic device, and the first operating system and the container share the memory of the electronic device.

11. An electronic device, comprising a first operating system and a container, wherein the container comprises a second operating system and a first application applicable to the second operating system, the container is used to provide a running environment of the second operating system for the first application, the electronic device displays a first interface, the first interface is an interface of the first operating system, and the first interface comprises an application icon of the first application;
the first operating system is configured to control, in response to a first operation performed by a user on the application icon of the first application in the first interface, the first application to run in the container;
the first application is used to send first description information of the first application to the first operating system, the first description information of the first application indicates a location at which first window information of the first application is stored in a memory of the electronic device, and the first window information of the first application is window information of a home page of the first application or an interface displayed before the first application is exited last time;
the first operating system is further configured to receive the first description information of the first application; and
the first operating system is further configured to: obtain the first window information of the first application from the memory of the electronic device based on the first description information of the first application, and display, based on the first window information of the first application, a second interface of the first application in a first window created by the first operating system.

12. The electronic device according to claim 11, wherein the second interface comprises a first control;
the first operating system is further configured to send, in response to a second operation performed by the user on the first control in the second interface, operation information of the second operation to the first application, and the operation information of the second operation comprises type information and location information of the second operation;
the first application is further used to determine, based on the operation information of the second operation, second window information and second description information that correspond to a third interface displayed after the first application responds to the second operation, and the second description information of the first application indicates a location at which the second window information of the first application is stored in the memory of the electronic device;
the first application is further used to send the second description information of the first application to the first operating system; and
the first operating system is further configured to: obtain the second window information of the first application from the memory of the electronic device based on the second description information of the first application, and display the third interface of the first application in the first window based on the second window information of the first application.

13. The electronic device according to claim 11 or 12, wherein
the first window comprises a second control, and the second control is used to trigger closing of the first window;
the first operating system is further configured to: in response to a third operation performed by the user on the second control, close the first window, and control the first application in the container to terminate running; or
the first operating system is further configured to: in response to a third operation performed by the user on the second control, close the first window, and control the first application in the container to keep running.

14. The electronic device according to any one of claims 11 to 13, wherein
the first operating system is further configured to send, in response to a fourth operation performed by the user on the first window, operation information of the fourth operation to the first application, wherein the fourth operation indicates an operation of zooming in or zooming out the first window by the user;
the first application is further used to determine, based on the operation information of the fourth operation, fourth window information and fourth description information that correspond to a fourth interface displayed after the first application responds to the fourth operation, and the fourth description information of the first application indicates a location at which the fourth window information of the first application is stored in the memory of the electronic device;
the first application is further used to send the fourth description information of the first application to the first operating system; and
the first operating system is further configured to: obtain the fourth window information of the first application from the memory of the electronic device based on the fourth description information of the first application, and display the fourth interface of the first application in the first window based on the fourth window information of the first application.

15. The electronic device according to any one of claims 11 to 14, wherein the container further comprises at least one other application applicable to the second operating system, the container is used to provide a running environment of the second operating system for the at least one other application, the first interface further comprises an application icon corresponding to the at least one other application, each of the other applications corresponds to one window created by the first operating system, and an interface of the other application is displayed in each window.

16. The electronic device according to claim 12, wherein a mapping relationship is established between the first window and the first application;
the first operating system is further configured to determine, based on the first window and the mapping relationship, the first application corresponding to the second interface; and
the first operating system is further configured to send the operation information of the second operation to the first application.

17. The electronic device according to any one of claims 11 to 16, wherein the first window information is determined by the first application according to a preset display protocol, and the first description information is sent by the first application to the first operating system according to the preset display protocol.

18. The electronic device according to claim 12, wherein the operation information of the second operation is sent by the first operating system to the first application according to a preset display protocol.

19. The electronic device according to claim 17 or 18, wherein
the first operating system is further configured to: receive a connection request sent by the first application according to the preset display protocol, and establish, in response to the connection request, a communication connection to the first application according to the preset display protocol.

20. The electronic device according to any one of claims 11 to 19, wherein the first operating system and the container share a kernel of the electronic device, and the first operating system and the container share the memory of the electronic device.

21. An electronic device, comprising a storage and one or more processors, wherein the storage is coupled to the processor, the storage stores computer program code, the computer program code comprises computer instructions, and when the computer instructions are executed by the processor, the electronic device is enabled to perform the application window display method according to any one of claims 1 to 10.

22. A computer-readable storage medium, comprising computer instructions, wherein when the computer instructions are run on an electronic device, the electronic device is enabled to perform the application window display method according to any one of claims 1 to 10.
